# EUROPEAN PATENT APPLICATION

(11) **EP 3 531 492 A1**
(43) Date of publication of application: **28.08.2019**
(21) Application number: 17861453.3
(22) Date of filing: 28.09.2017
(51) Int. Cl.: H01M 10/0567, H01B 1/06, H01M 4/13, H01M 10/052, H01M 10/0562, H01M 10/0565, H01M 10/0569

(54) **LITHIUM SECONDARY BATTERY**

(30) Priority: 20.10.2016 JP 2016206148
(71) Applicant: Hitachi, Ltd., Tokyo 100-8280 (JP)
(72) Inventor: NISHIMURA Etsuko, Tokyo 100-8280 (JP); ABE Makoto, Tokyo 100-8280 (JP); NOIE Akihiko, Tokyo 100-8280 (JP); NAOE Kazuaki, Tokyo 100-8280 (JP); AMASAKI Shimpei, Tokyo 100-8280 (JP); KAGA Yusuke, Tokyo 100-8280 (JP)
(74) Representative: Strehl Schübel-Hopf & Partner
(86) International application number: PCT/JP2017/035260
(87) International publication number: WO 2018/074174

(57) **Abstract**

An object is to provide a lithium secondary battery in which an uneven distribution of an electrolyte inside the battery is eliminated so as to suppress a decrease in performance.

It is characterized in that in a lithium secondary battery including a cathode, an anode, and a semi-solid electrolyte layer, the semi-solid electrolyte layer contains an ionic liquid, an electrolytic solvent selected from glymes represented by the formula 1: RO-(CH₂CH₂O)ₙ-R (Formula 1) (wherein R is an alkyl group having 1 to 4 carbon atoms, and n is an integer of 1 to 4), and a lithium salt, inactive particles that do not occlude or emit lithium ions are included at least in the semi-solid electrolyte layer among the cathode, the anode, and the semi-solid electrolyte layer, the cathode, the anode, and the semi-solid electrolyte layer are porous structures having pores, in the semi-solid electrolyte layer, the electrolytic solvent and the lithium salt are retained in the pores, the pores have an average pore diameter of 0.01 µm or more and 0.6 µm or less, and the inactive particles in the semi-solid electrolyte layer have a volume fraction of 33% or more and 80% or less.

## Description

### [Technical Field]

The present invention relates to a lithium secondary battery.

### [Background Art]

A lithium secondary battery has a high specific energy density and has attracted attention as a battery for electric vehicles or for electric power storage. As the electric vehicles, there are zero-emission electric vehicles (Battery Electric Vehicles (BEV)) mounted with no engine, hybrid electric vehicles mounted with both an engine and a secondary battery, and further plug-in electric vehicles charged with electricity delivered from an electrical grid. In particular, in BEV, a storage battery having a high specific energy density is required for increasing a traveling distance per charge. However, a conventional lithium secondary battery needs to add a cooling mechanism for the battery, and has a problem that the specific energy density becomes small in the battery system as a whole. If the cooling mechanism can be omitted by improving the heat resistance of the lithium secondary battery, the above-mentioned problem can be solved.

In order to improve the heat resistance of a lithium secondary battery, it is necessary to improve an organic electrolytic solution used in the conventional lithium secondary battery. One resolution method is a method of changing the organic electrolytic solution to an electrolyte layer having excellent heat resistance, and as such an electrolyte layer, a liquid in which a lithium salt is dissolved in an ionic liquid is known. In this description, the ionic liquid is a compound that is dissociated into a cation and an anion at normal temperature and maintains a liquid state. Incidentally, the ionic liquid is sometimes referred to as "ionic liquid", "low melting point molten salt", or "normal temperature molten salt".

As a prior art using an ionic liquid, PTL 1 discloses a solid ion conductor containing a normal temperature molten salt and insulating inorganic particles, a solid electrolyte film formed by compression-molding a solid ion conductive material containing the solid ion conductor, and an all-solid-state lithium secondary battery including a solid electrolyte layer containing the solid ion conductor.

Further, a lithium-ion battery in which an organic complex (glyme-based electrolyte) obtained by dissolving a lithium salt in a glyme is used in place of the above-mentioned ionic liquid, and a semi-solid electrolyte layer obtained by impregnating solid particles with this glyme-based electrolyte is included is known. For example, PTL 2 discloses a lithium battery including an anode containing metallic lithium or a lithium alloy, a cathode, and a polymer gel electrolyte in contact with the anode, wherein the polymer gel electrolyte has an ionic conductivity of 10⁻³ S/cm or more, a lithium ion transport number of 0.15 or more, and a lithium ion mobility of 10⁻⁶ cm²/V·sec or more, the polymer gel electrolyte contains a lithium salt, a polymer capable of forming a complex with the lithium salt, an insulating inorganic filler, and an organic solvent such as a glyme, the organic solvent is inactive to lithium, the lithium salt has an anionic radius of 2.5 Å or more, and the lithium salt has a molecular weight of 145 or more. Incidentally, the glyme here has an ethylene glycol dialkyl ether as a basic structure, and monoglyme, diglyme, triglyme, tetraglyme, pentaglyme, hexaglyme, etc. are known according to an increase in the number of repetitions of the basic structure.

### [Citation List]

### [Patent Literature]

[PTL 1] JP-A-2011-119158
[PTL 2] JP-A-2014-56822

### [Summary of Invention]

### [Technical Problem]

The above-mentioned glyme-based electrolyte has excellent heat resistance, however, when a sheet-like semi-solid electrolyte layer containing the glyme-based electrolyte is sandwiched between the cathode and the anode, due to a difference in the ability to retain the electrolyte between the electrode and the electrolyte layer, the glyme-based electrolyte moves from the sheet-like semi-solid electrolyte layer to the porous cathode and anode, or to the contrary, the glyme-based electrolyte moves from the cathode or the anode, and the electrolyte is unevenly distributed inside the battery, so that voltage loss due to the uneven density of the electrolyte might occur or liquid leakage from the semi-solid electrolyte layer might occur. Therefore, there was a problem that the performance of the lithium secondary battery is decreased.

In view of this, an object of the present invention is to provide a lithium secondary battery in which an uneven distribution of an electrolyte inside the battery is eliminated so as to suppress a decrease in performance.

### [Solution to Problem]

In order to achieve the above object, the present inventors conducted intensive studies, and as a result, they found that by making the pore diameters in the cathode, the anode, and the semi-solid electrolyte layer each having a porous structure uniform, the ability to retain the electrolyte becomes equal and the uneven distribution of the electrolyte is eliminated, so that the above object is achieved, and thus, completed the present invention.

That is, the present invention is characterized in that in a lithium secondary battery including a cathode, an anode, and a semi-solid electrolyte layer, the semi-solid electrolyte layer contains an ionic liquid, an electrolytic solvent selected from glymes represented by the following formula 1: RO-(CH₂CH₂O)ₙ-R (Formula 1) (wherein R is an alkyl group having 1 to 4 carbon atoms, and n is an integer of 1 to 4), and a lithium salt, inactive particles that do not occlude or emit lithium ions are included at least in the semi-solid electrolyte layer among the cathode, the anode, and the semi-solid electrolyte layer, the cathode, the anode, and the semi-solid electrolyte layer are porous structures having pores, in the semi-solid electrolyte layer, the electrolytic solvent and the lithium salt are retained in the pores, the pores have an average pore diameter of 0.01 µm or more and 0.6 µm or less, and the inactive particles in the semi-solid electrolyte layer have a volume fraction of 33% or more and 80% or less.

The present description incorporates the contents of the disclosure of Japanese Patent Application No. 2016-206148 that can serve as a basis for priority for the present application.

### [Advantageous Effects of Invention]

According to the present invention, a lithium secondary battery, in which uneven distribution of an electrolyte inside the battery is not caused and liquid leakage from a semi-solid electrolyte layer does not occur, and which exhibits high battery performance can be obtained. Incidentally, objects, configurations, and effects other than those described above will be clarified by the description of the following embodiments.

### [Brief Description of Drawings]

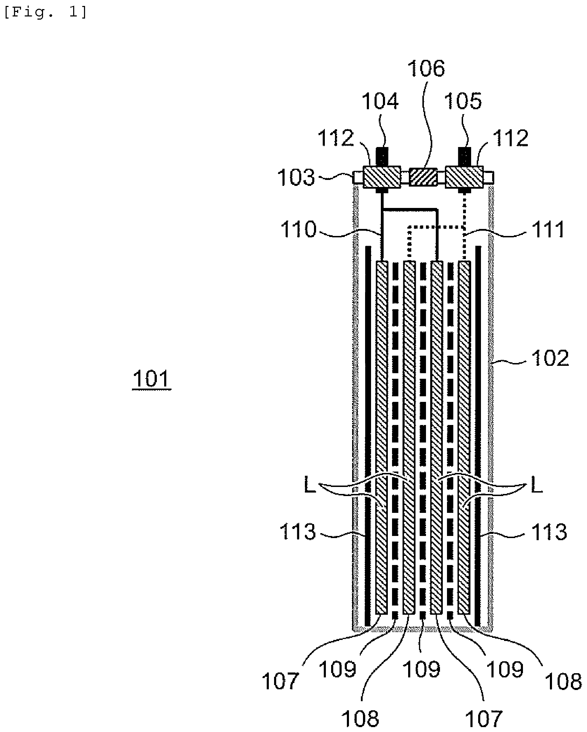

Fig. 1 is a view showing a cross section of one embodiment of a lithium secondary battery according to the present invention.

### [Description of Embodiments]

Hereinafter, the present invention will be described in detail based on embodiments.

### (Configuration of Lithium Secondary Battery)

Fig. 1 schematically shows an internal structure of one embodiment of a lithium secondary battery according to the present invention. A lithium secondary battery 101 is an electrochemical device capable of storing or utilizing electrical energy by occluding or emitting lithium ions for an electrode in a non-aqueous electrolyte. This is called another name: lithium-ion battery, non-aqueous electrolyte secondary battery, or non-aqueous electrolytic solution secondary battery, however, every battery is the subject matter of the present invention.

The lithium secondary battery 101 according to this embodiment has a configuration in which an electrode group composed of a cathode 107, an anode 108, and a semi-solid electrolyte layer 109 is stored in a battery container 102 in a tightly closed state. The semi-solid electrolyte layer 109 is formed on a surface of at least the cathode 107 or the anode 108 to form an integrated structure. The semi-solid electrolyte layer 109 electrically insulates the cathode 107 from the anode 108, and also has a function to transmit lithium ions by retaining an ionic liquid or a glyme and a lithium salt as an electrolyte. The electrode group can adopt various configurations such as a configuration in which strip-like electrodes are stacked and a configuration in which belt-like electrodes are wound and formed into a cylindrical shape or a flat shape.

The battery container 102 can select an arbitrary shape such as a cylindrical shape, a flat elliptical shape, or a rectangular shape according to the shape of the electrode group. The battery container 102 is tightly closed by covering an opening portion with a lid 103 after the electrode group is stored therein from an opening provided in an upper portion.

The lid 103 seals off the battery container 102 in a tightly closed state by joining the entire periphery of the outer edge thereof to the opening of the battery container 102 through, for example, welding, caulking, gluing, or the like. The lid 103 has a liquid injection port for injecting a constituent component of the semi-solid electrolyte layer 109 into the battery container 102 after sealing off the opening of the battery container 102. The liquid injection port is tightly closed by a liquid injection plug 106 after injecting the constituent component of the semi-solid electrolyte layer 109 into the battery container 102. The liquid injection plug 106 can also be provided with a safety mechanism. As the safety mechanism, a pressure valve for releasing the internal pressure of the battery container 102 may be provided.

To the lid 103, a cathode external terminal 104 and an anode external terminal 105 are fixed through an insulating seal member 112, and a short circuit of both terminals (the cathode external terminal 104 and the anode external terminal 105) is prevented by the insulating seal member 112. The cathode external terminal 104 is coupled to the cathode 107 through a cathode lead wire 110 and the anode external terminal 105 is coupled to the anode 108 through an anode lead wire 111. A material of the insulating seal member 112 can be selected from a fluororesin, a thermosetting resin, a glass hermetic seal, and the like, and an arbitrary insulating material that does not react with the constituent component of the solid electrolyte layer 109 and also has excellent airtightness can be used.

An insulating sheet 113 is also inserted between the electrode group and the battery container 102 so as not to cause a short circuit between the cathode 107 and the anode 108 through the battery container 102.

### (Configuration of Cathode)

The cathode 107 is constituted by a cathode active material, a conductive material, a binder, and a current collector. Representative examples of the cathode active material include LiCoO₂, LiNiO₂, and LiMn₂O₄. Additional examples thereof include LiMnO₃, LiMn₂O₃, LiMnO₂, Li₄Mn₅O₁₂, LiMn₂₋ₓMₓO₂ (provided that M is one or more members selected from Co, Ni, Fe, Cr, Zn, and Ta, and x is 0.01 to 0.2), Li₂Mn₃MO₈ (provided that M is one or more members selected from Fe, Co, Ni, Cu, and Zn), Li₁₋ₓAₓMn₂O₄ (provided that A is one or more members selected from Mg, B, Al, Fe, Co, Ni, Cr, Zn, and Ca, and x is 0.01 to 0.1), LiNi₁₋ₓMₓO₂ (provided that M is one or more members selected from Co, Fe, and Ga, and x is 0.01 to 0.2), LiFeO₂, Fe₂(SO₄)₃, LiCo₁₋ₓMₓO₂ (provided that M is one or more members selected from Ni, Fe, and Mn, and x is 0.01 to 0.2), LiNi₁₋ₓMₓO₂ (provided that M is one or more members selected from Mn, Fe, Co, Al, Ga, Ca, and Mg, and x is 0.01 to 0.2), Fe(MoO₄)₃, FeF₃, LiFePO₄, and LiMnPO₄. In particular, LiNi_{1/3}Mn_{1/3}Co_{1/3}O₂ is preferably used as the cathode active material. However, there is no restriction on the cathode material in the lithium secondary battery of this embodiment, and therefore, it is not limited to these materials. Other than LiNi_{1/3}Co_{1/3}Mn_{1/3}O₂, a Li₂MnO₃-LiMnO₂-based solid solution cathode having a higher capacity than this can also be used, and a high-power 5-V cathode (LiNi_{0.5}Mn_{1.5}O₄ or the like) may also be used. When such a high-capacity material or a high-power material is used, the thickness of a mixture layer of the cathode can be made thin, and an electrode area capable of being stored in the battery can be increased. As a result, a high output can be achieved by decreasing the resistance of the battery, and also the capacity of the battery can be increased as compared with when using a LiNi_{1/3}Co_{1/3}Mn_{1/3}O₂ cathode.

When fabricating the cathode 107, first, it is preferred to collect a powder of secondary particles (obtained by granulating primary particles) of a cathode active material. However, a powder of primary particles may be used without being granulated as in the case of lithium iron phosphate. It is not important whether the powder is subjected to granulation or whether the powder is primary particles or secondary particles in this embodiment.

The particle diameter of the cathode active material is regulated to be equal to or less than the thickness of the mixture layer. When a coarse particle having a size equal to or more than the thickness of the mixture layer is present in the powder of the cathode active material, the coarse particle is removed in advance by sieve classification, air classification, or the like, and particles with a size equal to or less than the thickness of the mixture layer are fabricated.

The average particle diameter (D₅₀) of the cathode active material in this embodiment is measured by a laser scattering method. It is not important whether the active material particles are subjected to granulation or whether the active material particles are primary particles or secondary particles in this embodiment, and therefore, a powder in a state of being actually used is analyzed without performing a crushing treatment before measuring the average particle diameter. Specifically, the average particle diameter D₅₀ can be determined by suspending a sample of the cathode active material in water and performing measurement using a laser scattering particle diameter measurement device (for example, Microtrack). The D₅₀ is defined as a particle diameter when a ratio (volume fraction) with respect to the volume of the entire sample is 50%. The range thereof is preferably 2 µm or more and 20 µm or less. In particular, when the average particle diameter (D₅₀) is within a range of 2 µm or more and 10 µm or less, it becomes possible to provide a cathode that has an enhanced ability to retain the electrolyte and is well-balanced while preventing deterioration of the filling property of the active material in the cathode due to the decrease in the particle diameter.

By using the above-mentioned cathode active material, an average pore diameter in the cathode mixture layer becomes within a favorable range of 0.01 µm or more and 0.6 µm or less after fabricating the cathode, and the ability to retain the electrolyte is improved.

The average pore diameter in the cathode mixture layer is a pore diameter of a void formed in the mixture layer constituted by an assembly of the cathode active material, the conductive material, and the binder. As described later, when an electrolytic solvent is also retained in the cathode, the average pore diameter is a pore diameter of a void in which the electrolytic solvent is removed. The average pore diameter can be measured by the following method. First, an electrolytic solvent component such as a glyme is eluted using an organic solvent with low viscosity or water. Specifically, when the cathode is immersed in an alcohol such as methanol or ethanol, dimethyl ether, acetone, dimethoxyethane, or water, the electrolytic solvent is eluted from the cathode. After the elution of the electrolytic solvent is repeated several times, the cathode is taken out, followed by drying under vacuum to remove the organic solvent with low viscosity or water, whereby a material in which the electrolytic solvent is removed from the pores of the cathode mixture layer is obtained. This is subjected to measurement of the pore diameter using a mercury porosimeter. In this embodiment, a median diameter is used as the average pore diameter.

It is necessary to prepare a cathode slurry for fabricating the cathode 107. The cathode slurry is prepared by dispersing a mixture of the cathode active material, the conductive material, and the binder in a solvent. As the conductive material, acetylene black, a mixture of acetylene black and carbon nanotubes (CNT), or the like can be used.

Further, as the binder, one that is not decomposed on a cathode surface and is also not dissolved in the electrolytic solvent can be used. Examples thereof include polyvinylidene fluoride (PVDF). In order to prepare an aqueous slurry, a binder of styrene-butadiene rubber and carboxymethyl cellulose may be used in place of PVDF or the like. Other than these, fluororubber, ethylene-propylene rubber, polyacrylic acid, polyimide, polyamide, or the like can also be used as the binder, and the binder is not particularly limited.

In order to enhance the ability to retain the electrolyte in the cathode 107, inactive particles in the present invention may be added to the cathode mixture layer. The addition amount thereof is desirably set within a range of 0.1 to 5 wt%, more desirably set within a range of 0.1 to 1 wt% with respect to the total mixture layer. When the addition amount of the inactive particles is too small, the ability to retain the electrolyte is decreased to the same level as that of an electrode without addition thereof. On the other hand, when the addition amount is too large, due to the insulating property of the inactive particles, the resistance of the cathode 107 is increased and the charge-discharge capacity of the cathode is decreased, and therefore, such a case is not preferred. Examples of the inactive particles include one or more compounds selected from the group consisting of SiO₂, Al₂O₃, AlOOH, TiO₂, ZrO₂, BaTiO₃, and Li₇La₃Zr₂O₁₂.

When the average particle diameter of the inactive particles is too large, the specific surface area is decreased to decrease the ability to retain the electrolyte, and when it is too small, the specific surface area is too large to increase the necessary amount of the binder, and therefore, such an average particle diameter is not preferred, and thus, the average particle diameter of the inactive particles is appropriately set in consideration of the balance thereof, and is specifically preferably 0.1 µm or more and 5 µm or less. The average particle diameter of the inactive particles is defined as a particle diameter (D₅₀) when a ratio (volume fraction) with respect to the volume of the entire sample is 50% in the same manner as the average particle diameter of the cathode active material. The average particle diameter (D₅₀) of the inactive particles is measured by a laser scattering method, and specifically can be determined by suspending a sample of the inactive particles in water and performing measurement using a laser scattering particle diameter measurement device (for example, Microtrack).

The solvent to be used for preparing the slurry may be any as long as it dissolves the binder, and 1-methyl-2-pyrrolidone or the like can be used for PVDF. The solvent is selected according to the type of the binder. In a dispersion treatment of the cathode active material, the conductive material, and the binder, a known mixer or homogenizer can be used.

After the cathode slurry obtained by mixing the cathode active material, the conductive material, the binder, and the solvent is adhered to a current collector by a doctor blade method, a dipping method, a spray method, or the like, the solvent is dried, and the cathode is press-molded using a roll press, whereby the cathode 107 can be fabricated. Further, by repeating the procedure from application to drying a plurality of times, a plurality of mixture layers can also be stacked on the current collector.

As the current collector, an aluminum foil having a thickness of 10 µm or more and 100 µm or less, an aluminum punched foil having a thickness of 10 µm or more and 100 µm or less and including pores with a pore diameter of 0.1 mm or more and 10 mm or less, an expanded metal, a foamed metal plate, or the like is used, and also as the material, other than aluminum, stainless steel, titanium, or the like can also be applied. In this embodiment, an arbitrary material can be used for the current collector without being limited to the material, the shape, the production method, or the like as long as it does not undergo a change such as dissolution or oxidation during use of the battery.

The thickness of the cathode mixture layer is desirably set to not less than the average particle diameter of the cathode active material, and specifically is preferably set within a range of 20 µm or more and 80 µm or less. When the cathode mixture layer is too thick, unless a large amount of the conductive material is added to the cathode mixture layer, a variation occurs in the charge level of the cathode active material on the surface of the mixture layer and in the vicinity of the surface of the current collector, and uneven charge/discharge occurs. Further, when the amount of the conductive material is increased, the volume of the cathode becomes bulky, and the specific energy density of the battery is decreased, and therefore, such a case is not preferred.

Further, the mixture density of the cathode mixture layer is preferably 3 g/cm³ or more. It is necessary to bring the conductive material and the cathode active material into close contact with each other to decrease the electronic resistance of the mixture layer.

### (Configuration of Anode)

The anode 108 is constituted by an anode active material, a binder, and a current collector. The anode active material is not particularly limited, and natural graphite or the like coated with amorphous carbon is preferably used. Other than this, silicon, tin, or a compound thereof (an oxide, a nitride, or an alloy with another metal) may be used in the anode active material. These active materials have a larger theoretical capacity than the theoretical capacity (372 Ah/kg) of graphite, and a capacity of 500 to 1500 Ah/kg is obtained. When such a high-capacity material is used, the thickness of a mixture of the anode can be made thin, and an electrode area capable of being stored in the battery can be increased. As a result, a high output can be achieved by decreasing the resistance of the battery, and also the capacity of the battery can be increased as compared with when using a graphite anode.

As a method of forming amorphous carbon on the surface of natural graphite, there is a method of depositing pyrolytic carbon on an anode active material powder. Specifically, a low molecular weight hydrocarbon such as ethane, propane, or butane is diluted with an inert gas such as argon and heated to 800 to 1200°C, whereby hydrogen is released from the hydrocarbon on the surface of an anode active material particle, and carbon is deposited on the surface of the anode active material particle. Carbon is in an amorphous form. As another method, an organic material such as polyvinyl alcohol or sucrose is added, and thereafter a heat treatment is performed at 300 to 1000°C in an inert gas atmosphere, whereby hydrogen and oxygen are released in a form of hydrogen, carbon monoxide, or carbon dioxide, and only carbon can be deposited on the surface of natural graphite. For example, a gas obtained by mixing 1% propane and 99% argon is brought into contact with natural graphite at 1000°C, whereby carbon can be deposited. The deposition amount of carbon is desirably in a range of 1 to 30 wt% with respect to the total anode active material. By coating with carbon, not only the discharge capacity at the first cycle is increased, but also the cycle life performance and the rate performance are improved.

The average particle diameter (D₅₀) of the anode active material in this embodiment is measured by a laser scattering method. The average particle diameter D₅₀ can be determined by suspending a sample of the anode active material in water and performing measurement using a laser scattering particle diameter measurement device (for example, Microtrack). The D₅₀ is defined as a particle diameter when a ratio (volume fraction) with respect to the volume of the entire sample is 50%. The range thereof is preferably within a range of 5 µm or more and 20 µm or less. In particular, when the average particle diameter (D₅₀) is within a range of 2 µm or more and 20 µm or less, it becomes possible to provide an anode that has an enhanced ability to retain the electrolyte and is well-balanced while suppressing the increase in the irreversible capacity due to the decrease in the particle diameter.

By using the above-mentioned anode active material, the average pore diameter in the anode mixture layer becomes within a favorable range of 0.01 µm or more and 0.6 µm or less after fabricating the anode, and the ability to retain the electrolyte is improved.

The average pore diameter in the anode mixture layer is a pore diameter of a void formed in the mixture layer constituted by an assembly of the anode active material and the binder. As described later, when an electrolytic solvent is also retained in the anode, the average pore diameter is a pore diameter of a void in which the electrolytic solvent is removed. The average pore diameter can be measured by the same method as for the average pore diameter in the cathode mixture layer described above. When the conductive material is added, the conductive material shall be removed. The pore diameter can be measured using a mercury porosimeter. In this embodiment, a median diameter is used as the average pore diameter.

It is necessary to prepare an anode slurry for fabricating the anode 108. The anode slurry is prepared by dispersing a mixture of the anode active material and the binder in a solvent.

Incidentally, in the same manner as the cathode 107, a conductive material such as acetylene black may be mixed as needed.

Further, as the binder, one that is not decomposed on an anode surface and is also not dissolved in the electrolytic solvent can be used. Examples thereof include polyvinylidene fluoride (PVDF). In order to prepare an aqueous slurry, a binder of styrene-butadiene rubber and carboxymethyl cellulose may be used in place of PVDF or the like. Other than these, fluororubber, ethylene-propylene rubber, polyacrylic acid, polyimide, polyamide, or the like can also be used as the binder, and the binder is not particularly limited.

In order to enhance the ability to retain the electrolyte in the anode 108, inactive particles in the present invention may be added to the anode mixture layer in the same manner as in the case of the cathode. The addition amount thereof is desirably set within a range of 0.1 to 5 wt%, more desirably set within a range of 0.1 to 1 wt% with respect to the total mixture layer. When the addition amount of the inactive particles is too small, the ability to retain the electrolyte is decreased to the same level as that of an electrode without addition thereof. On the other hand, when the addition amount is too large, due to the insulating property of the inactive particles, the resistance of the anode 108 is increased and the charge-discharge capacity of the anode is decreased, and therefore, such a case is not preferred. Examples of the inactive particles include one or more compounds selected from the group consisting of SiO₂, Al₂O₃, AlOOH, TiO₂, ZrO₂, BaTiO₃, and Li₇La₃Zr₂O₁₂. The average particle diameter of the inactive particles is the same as in the case of the cathode and is preferably 0.1 µm or more and 5 µm or less.

The solvent to be used for preparing the slurry may be any as long as it dissolves the binder, and 1-methyl-2-pyrrolidone or the like can be used for a binder of PVDF. Further, for example, when a binder of styrene-butadiene rubber and carboxymethyl cellulose is used, water can be used as the solvent, and the solvent is selected according to the type of the binder. In a dispersion treatment of the anode active material and the binder, a known mixer or homogenizer can be used.

After the anode slurry obtained by mixing the anode active material, the binder, and the solvent is adhered to a current collector by a doctor blade method, a dipping method, a spray method, or the like, the solvent is dried, and the anode is press-molded using a roll press, whereby the anode 108 can be fabricated. Further, by repeating the procedure from application to drying a plurality of times, a plurality of mixture layers can also be stacked on the current collector.

As the current collector, a copper foil having a thickness of 10 µm or more and 100 µm or less, a copper punched foil having a thickness of 10 µm or more and 100 µm or less and a pore diameter of 0.1 mm or more and 10 mm or less, an expanded metal, a foamed metal plate, or the like is used, and also as the material, other than copper, stainless steel, titanium, nickel, or the like can also be applied. In this embodiment, an arbitrary current collector can be used without being limited to the material, the shape, the production method, or the like.

The thickness of the anode mixture layer is desirably set to not less than the average particle diameter of the anode active material, and specifically is preferably 10 µm or more, preferably 15 µm or more and 50 µm or less. It is because if the thickness is set to the same as the average particle diameter, the electron conductivity between the adjacent particles is deteriorated. When the anode mixture layer is too thick, unless a large amount of the conductive material is added to the anode mixture layer, a variation occurs in the charge level of the anode active material on the surface of the mixture layer and in the vicinity of the surface of the current collector, and uneven charge/discharge occurs. Further, when the amount of the conductive material is increased, the volume of the anode becomes bulky, and the specific energy density of the battery is decreased, and therefore, such a case is not preferred.

### (Filling of Electrolyte in Cathode or Anode)

In order to fill the electrolyte in the pores of the cathode 107 or the anode 108, the electrolyte is added to the cathode or the anode and the pores in the electrode is allowed to absorb the electrolyte, whereby the electrolyte can be retained (electrolyte L in Fig. 1). Specifically, for example, a slurry obtained by mixing the electrolyte, the active material, the binder, etc. is prepared, and this slurry can be applied together onto the current collector.

The electrolyte contains an electrolytic solvent and a lithium salt. Examples of the lithium salt include an imide salt such as Li(NSO₂F)₂(LiFSI) or LiN(SO₂CF₃)₂(LiTFSI), LiC₄BO₈ (lithium bis(oxalato)borate), CF₃SO₃Li (lithium trifluoromethanesulfonate, LiBF₄ (lithium borofluoride), and LiPF₆ (lithium hexafluorophosphate) . Any of these can be used alone or a plurality of salts among these can be used in combination. The concentration of the lithium salt is preferably 1 mol or more and 3 mol or less with respect to 1 L of the electrolytic solvent.

As the electrolytic solvent, glymes represented by the formula 1 can be used.

RO-(CH₂CH₂O)ₙ-R

(In the formula 1, R is an alkyl group having 1 to 4 carbon atoms, and n is an integer of 1 to 4.)

Among these, triglyme (n=3) and tetraglyme (n=4) are particularly preferably used. Any of these glymes may be used alone or a plurality of types may be used in combination.

Further, an ionic liquid can be used as the electrolytic solvent in place of the glyme of the formula 1. The ionic liquid can be appropriately selected from various compounds, and examples thereof include 1-ethyl-3-methylimidazolium bis(trifluoromethylsulfonyl)imide (EMI-BTI), 1-ethyl-3-methylimidazolium trifluoromethanesulfonate EMI-TMS), 1-butyl-1-methylmethylpyrrolidinium bis(trifluoromethylsulfonyl)imide (BMP-BTI), 1-hexyl-3-methylimidazolium hexafluorophosphate (HMI-HFP), 1-ethyl-3-methylimidazolium dicyanamide (EMIDCA), and 11-methyl-3-octylimidazolium tetrafluoroborate (MOI-TFB). When a lithium salt such as LiFSI or LiTFSI is added to such an ionic liquid, a higher electrical conductivity can be obtained as compared with a case where a glyme is used as the electrolytic solvent. The use of a glyme is disadvantageous to the electrical conductivity as compared with the ionic liquid, but imposes a small load on the environment when leakage of the electrolyte occurs and has an advantage that the recycling cost can be reduced.

### (Configuration of Semi-Solid Electrolyte Layer)

The semi-solid electrolyte layer 109 is inserted between the cathode 107 and the anode 108 so as to be able to transfer lithium ions between the electrodes. The semi-solid electrolyte layer 109 includes pores formed by an assembly of the inactive particles, and the above-mentioned ionic liquid or glyme as the electrolytic solvent, and the lithium salt are retained therein.

As the inactive particles, one or more compounds selected from the group consisting of SiO₂, Al₂O₃, AlOOH, TiO₂, ZrO₂, BaTiO₃, and Li₇La₃Zr₂O₁₂ are preferably used. Further, the average particle diameter of the inactive particles is the same as in the case of the cathode and the anode and is preferably 0.1 µm or more and 5 µm or less.

The volume fraction of the inactive particles in the semi-solid electrolyte layer 109 is set to 33% or more and 80% or less. It is preferably 33% or more and 44% or less. The volume fraction of the inactive particles can be controlled by the addition amount of the inactive particles. When the volume fraction is less than 33%, the retention amount of the electrolyte is decreased and liquid leakage is likely to occur, and further, when the volume fraction exceeds 80%, the relative amount of the electrolyte is decreased to decrease the electrical conductivity, and therefore, such a case is not applicable.

Further, the average pore diameter of the semi-solid electrolyte layer 109 is set to 0.01 µm or more and 0.6 µm or less. It is preferably 0.01 µm or more and 0.25 µm or less. When it is within this range, the electrolytic solvent and the lithium salt necessary for the transfer of lithium ions are retained, and the electrolyte layer having low resistance can be provided. The pore diameter of the semi-solid electrolyte layer can be controlled by the addition amount of the inactive particles.

The pore diameter of the semi-solid electrolyte layer can also be measured according to the same procedure as in the case where the pore diameter of the mixture layer of the cathode or the anode is measured using a mercury porosimeter. That is, an electrolytic solvent component such as a glyme is eluted by immersing the semi-solid electrolyte layer in an organic solvent with low viscosity such as an alcohol such as methanol or ethanol, dimethyl ether, acetone, or dimethoxyethane, or water. After the elution of the electrolytic solvent is repeated several times, the semi-solid electrolyte layer is taken out, followed by drying under vacuum to remove the organic solvent with low viscosity or water, whereby a material in which the electrolytic solvent is removed from the pores of the semi-solid electrolyte layer is obtained. This is subjected to measurement of the pore diameter using a mercury porosimeter. In this embodiment, a median diameter is used as the average pore diameter.

Further, an average value of center-to-center distances of the inactive particles included in the semi-solid electrolyte layer 109 is preferably 1 time or more and 5 times or less of the average particle diameter of the inactive particles. By controlling the average value within this range, an effect of increasing the retention amount of the electrolyte is obtained by a small amount of the inactive particles. Here, the center-to-center distances of the inactive particles can be determined by a method in which the outer edges of particles are approximated to circles, and the center-to-center distances thereof are measured, and the above-mentioned average value refers to an average value of randomly obtained three center-to-center distances.

The thickness of the semi-solid electrolyte layer 109 is 1 µm or more and 100 µm or less, more preferably 5 µm or more and 25 µm or less. When the thickness is too thin, a pinhole is formed in the semi-solid electrolyte layer and a short circuit between the cathode and the anode easily occurs, and on the other hand, when the thickness is too thick, the moving distance of lithium ions becomes too large, and the resistance required for the lithium ions to move between the cathode and the anode is increased, and therefore, the thickness is appropriately set in consideration of the balance thereof.

The semi-solid electrolyte layer 109 may be fabricated directly on the cathode 107 or the anode 108. Further, after fabricating the semi-solid electrolyte layer on a resin or metal support sheet, the semi-solid electrolyte layer is peeled off from the support sheet and may be stacked on the cathode 107 or the anode 108 by gluing.

When the semi-solid electrolyte layer 109 is fabricated directly on the cathode 107 or the anode 108, the inactive particles and the lithium salt and the electrolytic solvent composed of the ionic liquid or the glyme are mixed with a solvent such as 1-methyl-2-pyrrolidone (NMP), and the resulting slurry is applied to the surface of the cathode or the anode, and NMP is removed by drying, whereby the semi-solid electrolyte layer 109 can be obtained. After the semi-solid electrolyte layer 109 is formed, compression may be performed by a roll press or may be omitted. Further, when a binder such as polyvinylidene fluoride or ethylene tetrafluoride is added into the slurry as needed, the mechanical strength of the semi-solid electrolyte layer 109 is increased, and therefore, such addition is preferred. In order to disperse the binder, other than NMP, a lower alcohol such as ethanol or water may be used.

### (Assembling of Lithium Secondary Battery)

The electrode group is constituted by stacking the cathode 107 or the anode 108 on which the semi-solid electrolyte layer 109 is formed and the other electrode (the anode 108 or the cathode 107). The semi-solid electrolyte layer 109 may be formed on the surface of either of the cathode 107 and the anode 108 or may be formed on both. The semi-solid electrolyte layer 109 functions as a vehicle that allows lithium ions to move between the cathode 107 and the anode 108 while preventing a short circuit between the cathode and the anode.

The insulating sheet 113 is inserted between the electrode disposed on an end of the electrode group and the battery container 102 so as not to cause a short circuit between the cathode 107 and the anode 108 through the battery container 102.

To an upper portion of the stacked body, an external terminal is electrically connected through a lead wire. The cathode 107 is connected to the cathode external terminal 104 of the lid 103 through the cathode lead wire 110. The anode 108 is connected to the anode external terminal 105 of the lid 103 through the anode lead wire 111. Incidentally, the cathode lead wire 110 and the anode lead wire 111 can adopt an arbitrary shape such as a wire-like shape or a plate-like shape. The shape and material of the cathode lead wire 110 and the anode lead wire 111 can be arbitrarily selected according to the structure of the battery container 102 as long as they have a structure capable of decreasing an ohmic loss when an electric current is allowed to flow and also they are made of a material that does not react with the electrolyte.

The material of the battery container 102 is appropriately selected from a material having corrosion resistance to the electrolyte such as aluminum, stainless steel, and nickel-plated steel.

Thereafter, the lid 103 is brought into close contact with the battery container 102, whereby the whole battery is tightly closed. For example, the lid 103 can be attached to the battery container 102 by caulking. In the method of tightly closing the battery, a known technique such as welding or gluing may be applied.

The liquid injection plug 106 is used when the electrolyte is added to the cathode 107 or the anode 108, however, when the electrolyte is retained in the electrode in advance, the liquid injection plug 106 is not needed.

### [Examples]

Next, the present invention will be described in more detail based on Reference Examples, Examples, and Comparative Examples, however, the present invention is not limited to these Examples.

### (Reference Examples)

Semi-solid electrolyte layers were fabricated according to various compositions, and electrical conductivities were measured. In Table 1, the specifications and the measurement results of the electrical conductivities of the semi-solid electrolyte layers of Reference Examples 1 to 17 and Comparative Reference Examples 1 to 3 are shown. In the columns of the inactive particles in Table 1, the type (chemical formula) of the inactive particles used in the semi-solid electrolyte layer, the average particle diameter D₅₀ thereof, the addition amount (as the unit, both vol% and wt% are shown) thereof in the semi-solid electrolyte layer, and the average pore diameter of the semi-solid electrolyte layer are shown. The average pore diameter was measured using a mercury porosimeter. In the columns of the lithium salt in Table 1, the type of the lithium salt used in each example and the addition amount (expressed in wt%) thereof in the semi-solid electrolyte layer are shown, and in the columns of the electrolytic solvent, the type (chemical formula) of the electrolytic solvent adopted and the addition amount thereof in the semi-solid electrolyte layer are shown. Incidentally, the concentration of the lithium salt with respect to 1 L of the electrolytic solvent was set to 2 mol. In the column of the electrical conductivity in Table 1, the measured value of the electrical conductivity of the semi-solid electrolyte layer at 25°C is shown, and the semi-solid electrolyte layer was inserted between two sheets of metallic lithium, and the electrical conductivity was calculated from the resistance value.

Reference Example 1 to Reference Example 4 are the results of evaluating the relationship between the addition amount of the inactive particles and the electrical conductivity using SiO₂ as the inactive particles. When the volume fraction of SiO₂ is within a range of 33.2% to 74.9%, the average pore diameter of the semi-solid electrolyte layer is within a range of 0.01 µm to 0.05 µm, and the semi-solid electrolyte layer from which leakage of the lithium salt or the electrolytic solvent does not occur could be fabricated. Further, as the addition amount of SiO₂ is smaller, that is, as the addition amount of the electrolyte (the lithium salt and the electrolytic solvent) is larger, the electrical conductivity tends to be higher.

Further, liquid leakage of the electrolyte from the semi-solid electrolyte layer did not occur. In the experiment, the semi-solid electrolyte layer of each of the Reference Examples was inserted between two sheets of a drug packing paper or a polyethylene porous separator, and then pressurized. A pressurizing force was set to 3 MPa per unit area of the semi-solid electrolyte layer. The weight of the drug packing paper or the polyethylene porous separator did not change, and therefore, it could be confirmed that liquid leakage did not occur.

Reference Example 5 to Reference Example 10 show the specifications and the measurement results of the electrical conductivities of the semi-solid electrolyte layers when the inactive particles were changed to Al₂O₃, AlOOH, TiO₂, ZrO₂, BaTiO₃, or Li₇La₃Zr₂O₁₂. The addition amount was made equal to the addition amount of SiO₂ in Reference Example 1. When comparing with the electrical conductivity in Reference Example 1, it was found that substantially the same electrical conductivity was obtained. Further, leakage of the lithium salt or the electrolytic solvent did not occur.

In Reference Example 11 to Reference Example 13, the average particle diameter of SiO₂ was changed, and the average pore diameter of the semi-solid electrolyte layer was set to 0.10 µm or more and 0.48 µm or less. The addition amount of SiO₂ was made equal to the addition amount in Reference Example 1. When comparing with the electrical conductivity in Reference Example 1, it was found that substantially the same electrical conductivity was obtained. Further, even if the average pore diameter of the semi-solid electrolyte layer was 0.48 µm, leakage of the lithium salt or the electrolytic solvent did not occur.

Reference Example 14 and Reference Example 15 are the results of changing the electrolytic solvent to triglyme or diglyme. When comparing with Reference Example 1, the electrical conductivity was the same, and leakage of the lithium salt or the electrolytic solvent did not occur.

Also in the case of Reference Example 16 in which the electrolytic solvent was changed to 1-ethyl-3-methylimidazolium
bis (trifluoromethylsulfonyl) imide (EMI-BTI) which is an ionic liquid, leakage of the lithium salt or the electrolytic solvent did not occur similarly, and the electrical conductivity could be increased. When the electrolytic solvent was changed to 1-ethyl-3-methylimidazolium dicyanamide (EMI-DCA) which is an ionic liquid likewise, as shown in Reference Example 17, the electrical conductivity could be further increased while suppressing leakage of the lithium salt or the electrolytic solvent.

Comparative Reference Example 1 and Comparative Reference Example 2 are the results of examining a case where the volume fraction was decreased (Comparative Reference Example 1) and a case where the volume fraction was increased (Comparative Reference Example 2) using SiO₂ in Example 1. In the case of Comparative Reference Example 1, the electrical conductivity was substantially the same as in Reference Example 1. However, according to the below-mentioned test result for liquid leakage (Table 2) as a lithium secondary battery, Comparative Reference Example 1 was not suitable. In the case of Comparative Reference Example 2, the addition amount of SiO₂ was too large, and the electrical conductivity was significantly decreased.

Comparative Reference Example 3 is the result of increasing the average particle diameter of SiO₂ to increase the average pore diameter (0.80 µm). The electrical conductivity was the same level as in Reference Example 1. However, according to the below-mentioned test result for liquid leakage (Table 2) as a lithium secondary battery, Comparative Reference Example 3 was not suitable.

### [Table 1]

**Table 1 Specification and Electrical Conductivity of Semi-Solid Electrolyte Layer (Measurement Temperature: 25°C)**

| | Inactive particles | | | | | Lithium salt | | Electrolytic solvent | | Electrical conductivity (mS/cm) |
|---|---|---|---|---|---|---|---|---|---|---|
| | Chemical formula | Average particle diameter (µm) | Addition amount (vol%) | Addition amount (wt%) | Average pore diameter (µm) | Chemical formula | Addition amount (wt%) | Chemical formula | Addition amount (wt%) | |
| Ref. Ex. 1 | SiO₂ | 0.1 | 33.2 | 60.0 | 0.01 | LiTFSI | 22.6 | tetraglyme | 17.4 | 0.8 |
| Ref. Ex. 2 | SiO₂ | 0.1 | 43.6 | 70.0 | 0.02 | LiTFSI | 17.0 | tetraglyme | 13.1 | 0.5 |
| Ref. Ex. 3 | SiO₂ | 0.1 | 57.0 | 80.0 | 0.03 | LiTFSI | 11.3 | tetraglyme | 8.7 | 0.1 |
| Ref. Ex. 4 | SiO₂ | 0.1 | 74.9 | 90.0 | 0.05 | LiTFSI | 5.7 | tetraglyme | 4.4 | 0.07 |
| Ref. Ex. 5 | Al₂O₃ | 0.1 | 33.2 | 73.1 | 0.02 | LiTFSI | 15.2 | tetraglyme | 11.7 | 0.7 |
| Ref. Ex. 6 | AlOOH | 0.1 | 33.2 | 67.7 | 0.02 | LiTFSI | 18.3 | tetraglyme | 14.1 | 0.7 |
| Ref. Ex. 7 | TiO₂ | 0.1 | 33.2 | 74.4 | 0.02 | LiTFSI | 14.4 | tetraglyme | 11.1 | 0.9 |
| Ref. Ex. 8 | ZrO₂ | 0.1 | 33.2 | 80.4 | 0.02 | LiTFSI | 11.1 | tetraglyme | 8.5 | 0.8 |
| Ref. Ex. 9 | BaTiO₃ | 0.1 | 33.2 | 80.0 | 0.02 | LiTFSI | 11.3 | tetraglyme | 8.7 | 0.6 |
| Ref. Ex. 10 | LLZ | 0.1 | 33.2 | 80.0 | 0.02 | LiTFSI | 11.3 | tetraglyme | 8.7 | 0.9 |
| Ref. Ex. 11 | SiO₂ | 1.0 | 33.2 | 60.0 | 0.10 | LiTFSI | 22.6 | tetraglyme | 17.4 | 1 |
| Ref. Ex. 12 | SiO₂ | 3.0 | 33.2 | 60.0 | 0.25 | LiTFSI | 22.6 | tetraglyme | 17.4 | 0.9 |
| Ref. Ex. 13 | SiO₂ | 6.0 | 33.2 | 60.0 | 0.48 | LiTFSI | 22.6 | tetraglyme | 17.4 | 0.8 |
| Ref. Ex. 14 | SiO₂ | 0.1 | 33.2 | 60.0 | 0.02 | LiTFSI | 22.6 | triglyme | 17.4 | 0.7 |
| Ref. Ex. 15 | SiO₂ | 0.1 | 33.2 | 60.0 | 0.02 | LiTFSI | 22.6 | diglyme | 17.4 | 0.6 |
| Ref. Ex. 16 | SiO₂ | 0.1 | 33.2 | 60.0 | 0.02 | LiTFSI | 22.6 | EMI-BTI | 17.4 | 1.2 |
| Ref. Ex. 17 | SiO₂ | 0.1 | 33.2 | 60.0 | 0.02 | LiTFSI | 22.6 | EMI-DCA | 17.4 | 1.5 |
| Comp. Ref. Ex. 1 | SiO₂ | 0.1 | 24.9 | 50.0 | 0.01 | LiTFSI | 28.3 | tetraglyme | 21.8 | 0.8 |
| Comp. Ref. Ex. 2 | SiO₂ | 0.1 | 86.3 | 95.0 | 0.08 | LiTFSI | 2.8 | tetraglyme | 2.2 | 0.01 |
| Comp. Ref. Ex. 3 | SiO₂ | 10.0 | 33.2 | 60.0 | 0.80 | LiTFSI | 22.6 | tetraglyme | 17.4 | 0.6 |

Subsequently, lithium secondary batteries were fabricated by stacking the semi-solid electrolyte shown in Table 1 and the electrodes, and a test for liquid leakage from the stacked body and measurement of the battery performance were performed. The results are shown in Table 2. In Example 1 to Example 5 in Table 2, the results for the configuration of the present invention are summarized. In the columns of the cathode active material particles in Table 2, the type (chemical formula) of the cathode active material, the average particle diameter thereof, the addition amount thereof in the cathode mixture layer, and the average pore diameter thereof are shown.

In the cathode slurry for fabricating the cathode, in 100 wt% of the components constituting the mixture layer, the cathode active material at 88 wt%, the conductive material at 5 wt%, and a PVDF (polyvinylidene fluoride) binder at 7 wt% were contained. As the conductive material, a mixture of acetylene black and carbon nanotubes (CNT) was used, and the respective weight compositions were set to 4.7 wt% and 0.3 wt%.

Similarly, the specification of the anode active material is shown in Table 2. In the anode slurry for fabricating the anode, in 100 wt% of the components constituting the mixture layer, the anode active material at 95.9 wt%, the conductive material at 0.1 wt%, and a PVDF (polyvinylidene fluoride) binder at 4 wt% were contained. As the anode active material, a material obtained by depositing carbon at 2 wt% on the surface of graphite was used. Further, as the conductive material, carbon nanotubes (CNT) were used.

In the columns of the lithium salt and the electrolytic solvent in Table 2, the types of the lithium salt and the electrolytic solvent retained in the pores of the cathode and the anode are shown. Incidentally, the concentration of the lithium salt with respect to 1 L of the electrolytic solvent was set to 2 mol. The lithium salt and the electrolytic solvent were retained only in the pores after fabricating the electrodes, and the excess components adhered to the surfaces of the electrodes were removed using a nonwoven fabric or the like. In the column of the semi-solid electrolyte layer type, Reference Example No. corresponding to the used semi-solid electrolyte layer is shown.

In Table 2, the results of verifying the presence or absence of liquid leakage when applying a load of 5 MPa to the stacked body in which the semi-solid electrolyte layer was inserted between the cathode and the anode in a vertical direction with respect to a plane of the stacked body (for example, the entire rear face of the cathode) are shown. The presence or absence of liquid leakage was determined based on the presence or absence of seepage of the lithium salt or the electrolytic solvent by wiping an end portion of the stacked body with a nonwoven fabric.

In the case of Example 1 to Example 5, it was found that liquid leakage from the stacked body did not occur and the electrolyte or the like was retained in the electrodes. Further, the results of measuring a discharge capacity by charging and discharging at 0.1 C with respect to a design capacity of 3 Ah of the battery are shown in the column of "Capacity at 0.1 C" in Table 2. The electric current was set to 0.3 A, and charging was performed at a constant current of 0.3 A until reaching 4.2 V, and after reaching 4.2 V, constant voltage charging at 4.2 V was performed until reaching 0.03 A. Thereafter, discharging was performed at a constant current of 0.3 A until the battery voltage reached 2.8 V, and the obtained discharge capacity was defined as "Capacity at 0.1 C". It is desired to obtain the design capacity under such conditions since the rate is low. In Example 1 to Example 5, the design capacity of 3 Ah is obtained.

Further, the constant current value was increased to 3 A, and a capacity during discharging at 1 C was obtained. This result is shown in the column of "Capacity at 1 C" in Table 2. Also in any of the batteries of Example 1 to Example 5, a capacity close to the design capacity of 3 Ah was obtained. In particular, in the batteries using the semi-solid electrolyte layers of Reference Example 16 and Reference Example 17 having a high electrical conductivity in Table 1, a large capacity at 1 C could be obtained.

Comparative Example 1 to Comparative Example 3 are the results when using the semi-solid electrolyte layer of Comparative Reference Example 1. In the case of this configuration, liquid leakage from the semi-solid electrolyte layer occurred. This is considered to be because the amounts of the lithium salt and the electrolytic solvent contained in the semi-solid electrolyte layer are too large, and therefore, the lithium salt and the electrolytic solvent seeped out by pressurization.

Comparative Example 4 to Comparative Example 6 are the results when using the semi-solid electrolyte layer of Comparative Reference Example 3. Also in the case of this configuration, liquid leakage from the semi-solid electrolyte layer occurred. This is considered to be because the SiO₂ particle diameter in the semi-solid electrolyte is large and also the average pore diameter is too large, and therefore, the ability to retain the lithium salt and the electrolytic solvent is deteriorated.

### [Table 2]

**Table 2 Test Results for Liquid Leakage and Battery Performance of Lithium Secondary Battery**

| | Cathode active material | | | | Anode active material | | | | Lithium salt | Electrolytic solvent | Semi-solid electrolyte layer | Liquid leakage from stacked body | Capacity at 0.1 C (Ah) | Capacity at 1 C (Ah) |
|---|---|---|---|---|---|---|---|---|---|---|---|---|---|---|
| | Chemical formula | Average particle diameter (µm) | Addition amount (wt%) | Average pore diameter (µm) | Composition | Average particle diameter (µm) | Addition amount (wt%) | Average pore diameter (µm) | | | | | | |
| Ex. 1 | LiNi_{1/3}Mn_{1/3}Co_{1/3}O₂ | 2.0 | 88.0 | 0.15 | graphite | 5.0 | 95.9 | 0.12 | LiTFSI | tetraglyme | Ex. 1 | absent | 3.0 | 2.8 |
| Ex. 2 | LiNi_{1/3}Mn_{1/3}Co_{1/3}O₂ | 6.0 | 88.0 | 0.48 | graphite | 10.0 | 95.9 | 0.30 | LiTFSI | tetraglyme | Ex. 1 | absent | 3.0 | 2.9 |
| Ex. 3 | LiNi_{1/3}Mn_{1/3}Co_{1/3}O₂ | 10.0 | 88.0 | 0.52 | graphite | 20.0 | 95.9 | 0.51 | LiTFSI | tetraglyme | Ex. 1 | absent | 3.0 | 2.9 |
| Ex. 4 | LiNi_{1/3}Mn_{1/3}Co_{1/3}O₂ | 10.0 | 88.0 | 0.52 | graphite | 20.0 | 95.9 | 0.51 | LiTFSI | EMI-BTI | Ex. 16 | absent | 3.0 | 2.9 |
| Ex. 5 | LiNi_{1/3}Mn_{1/3}Co_{1/3}O₂ | 10.0 | 88.0 | 0.52 | graphite | 20.0 | 95.9 | 0.51 | LiTFSI | EMI-DCA | Ex. 17 | absent | 3.0 | 2.9 |
| Comp. Ex. 1 | LiNi_{1/3}Mn_{1/3}Co_{1/3}O₂ | 2.0 | 88.0 | 0.15 | graphite | 5.0 | 95.9 | 0.12 | LiTFSI | tetraglyme | Comp. Ex. 1 | present | 3.0 | 2.4 |
| Comp. Ex. 2 | LiNi_{1/3}Mn_{1/3}Co_{1/3}O₂ | 6.0 | 88.0 | 0.48 | graphite | 10.0 | 95.9 | 0.30 | LiTFSI | tetraglyme | Comp. Ex. 1 | present | 2.9 | 2.4 |
| Comp. Ex. 3 | LiNi_{1/3}Mn_{1/3}Co_{1/3}O₂ | 10.0 | 88.0 | 0.52 | graphite | 20.0 | 95.9 | 0.51 | LiTFSI | tetraglyme | Comp. Ex. 1 | present | 2.8 | 2.2 |
| Comp. Ex. 4 | LiNi_{1/3}Mn_{1/3}Co_{1/3}O₂ | 2.0 | 88.0 | 0.15 | graphite | 5.0 | 95.9 | 0.12 | LiTFSI | tetraglyme | Comp. Ex. 3 | present | 3.0 | 2.3 |
| Comp. Ex. 5 | LiNi_{1/3}Mn_{1/3}Co_{1/3}O₂ | 6.0 | 88.0 | 0.48 | graphite | 10.0 | 95.9 | 0.30 | LiTFSI | tetraglyme | Comp. Ex. 3 | present | 3.0 | 2.1 |
| Comp. Ex. 6 | LiNi_{1/3}Mn_{1/3}Co_{1/3}O₂ | 10.0 | 88.0 | 0.52 | graphite | 20.0 | 95.9 | 0.51 | LiTFSI | tetraglyme | Comp. Ex. 3 | present | 3.0 | 2.0 |

Hereinabove, embodiments of the present invention have been described in detail, however, specific configurations are not limited to the embodiments and a design change and the like in a range not departing from the gist of the invention are included in the invention.

### [Reference Sings List]

- 101: lithium secondary battery
- 102: battery container
- 103: lid
- 104: cathode external terminal
- 105: anode external terminal
- 106: liquid injection plug
- 107: cathode
- 108: anode
- 109: semi-solid electrolyte layer
- 110: cathode lead wire
- 111: anode lead wire
- 112: insulating seal member
- 113: insulating sheet
- L: electrolyte

All publications, patents, and patent applications cited herein are incorporated herein by reference in their entirety.

## Claims

1. A lithium secondary battery comprising a cathode, an anode, and a semi-solid electrolyte layer, wherein
the semi-solid electrolyte layer contains an ionic liquid, an electrolytic solvent selected from glymes represented by the following formula 1:
RO-(CH₂CH₂O)ₙ-R (Formula 1)
(wherein R is an alkyl group having 1 to 4 carbon atoms, and n is an integer of 1 to 4), and a lithium salt,
inactive particles that do not occlude or emit lithium ions are included at least in the semi-solid electrolyte layer among the cathode, the anode, and the semi-solid electrolyte layer,
the cathode, the anode, and the semi-solid electrolyte layer are porous structures having pores, in the semi-solid electrolyte layer, the electrolytic solvent and the lithium salt are retained in the pores, and the pores have an average pore diameter of 0.01 µm or more and 0.6 µm or less, and
the inactive particles in the semi-solid electrolyte layer have a volume fraction of 33% or more and 80% or less.

2. The lithium secondary battery according to claim 1, wherein the inactive particles have an average particle diameter of 0.1 µm or more and 5 µm or less.

3. The lithium secondary battery according to claim 1, wherein an average value of center-to-center distances of the inactive particles included in the semi-solid electrolyte layer is 1 time or more and 5 times or less of the average particle diameter of the inactive particles.

4. The lithium secondary battery according to claim 1, wherein the inactive particles are one or more compounds selected from the group consisting of SiO₂, Al₂O₃, AlOOH, TiO₂, ZrO₂, BaTiO₃, and Li₇La₃Zr₂O₁₂.
